# EUROPEAN PATENT APPLICATION

(11) **EP 2 375 617 A1**
(43) Date of publication of application: **12.10.2011**
(21) Application number: 11002990.7
(22) Date of filing: 08.04.2011
(51) Int. Cl.: H04L 5/00, H04W 72/04, H04W 4/06

(54) **Method for managing sounding reference signal transmission**

(30) Priority: 08.04.2010 US 322079 P
(71) Applicant: HTC Corporation, Taoyuan County 330 (TW)
(72) Inventor: Jen, Yu-Chih, Taoyuan City Taoyuan County 330 (TW)
(74) Representative: Wagner, Karl H.

(57) **Abstract**

A method of handling a sounding reference signal (SRS) transmission for a mobile device in a wireless communication system is disclosed. The method comprises enabling a mobile device-specific carrier aggregation (CA) with at least one uplink (UL) component carrier, and performing the SRS transmission on the at least one UL component carrier to a network according to at least one of a mobile device-specific SRS configuration, a component carrier-specific SRS configuration and a cell-specific SRS configuration, which are configured by the network.

## Description

### Cross Reference To Related Applications

This application claims the benefit of U.S. Provisional Application No. 61/322,079, filed on April 8, 2010 and entitled "Method and apparatus for sounding reference signal enhancement", the contents of which are incorporated herein in their entirety.

### Background of the Invention

### 1. Field of the Invention

The present invention relates to a method used in a wireless communication system and related communication device, and more particularly, to a method of handling sounding reference signal transmission in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

A sounding reference signal (SRS) is transmitted by the UE and received by the eNB in the LTE system. The main purpose of the SRS is used for a channel quality estimation so as to perform a frequency-selective scheduling among UEs on an uplink (UL). Therefore, a frequency band on which the UE transmits the SRS can be wider than those for transmitting the data and control signals. Frequency bands for transmitting SRSs of the UEs shall be allowed to be overlapped such that the eNB can perform the frequency-selective scheduling among the UEs over the overlapped frequency bands. Moreover, the SRS can also be used for enhancing power control, modulation and coding scheme (MCS) selection, positioning and timing advance, obtaining an angle required for beamforming and performing an initial acquisition, especially when the UE is not scheduled for a period of time. In the LTE system, an SRS transmission can be periodic or aperiodic. In the periodic case, the eNB configures the UE to transmit the SRS periodically until the UE powers off or is reconfigured. In the aperiodic case, the UE transmits the SRS only when the eNB requests the SRS transmission from the UE. Besides, a power for the SRS transmission is usually limited to a certain value to avoid a nonlinear distortion of an amplifier in the UE when the UE boosts the power at a coverage edge of the eNB.

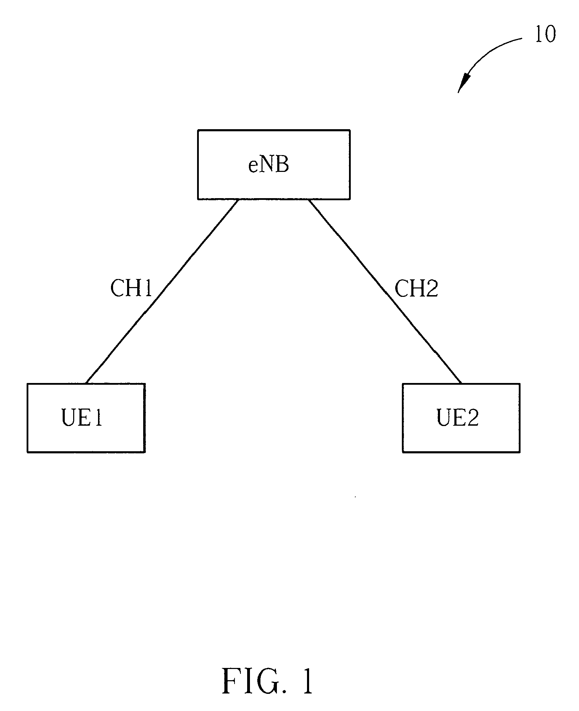

Please refer to Fig. 1, which is a schematic diagram an examplary wireless communication system according to the prior art. A UE1 and UE2 both transmit SRSs on a frequency band, which may comprises multiple resoruce blocks or subcarriers. Since locations and behaviors of the UE1 and the UE2 may not be the same, channels CH1 and CH2 experienced by the SRSs of the UE1 and UE2, respectively, are also different. The eNB estimates the received SRSs from the UE1 and the UE2, and obtain channel qualities of the channels CH1 and CH2. If the channel quality of the channel CH1 is better than the one of the channel CH2, the eNB configures more or all resources of the frequency band to the UE1. In constrast, if the channel quality of the channel CH2 is better than the one of the channel CH1, the eNB configures more or all resources of the frequency band to the UE2. Since the UE with a better channel quality is capable of using a higher level modulation and a lower rate coding, the system capacity is increased in terms of more data being transmitted and received. In short, the eNB configures more or all resoruces on the frequency band to the UE with a better channel quality. The capacity gain becomes larger when the frequency bands of more UEs corresponding to different channel qualities are scheduled by the eNB.

Please note that, SRSs are transmitted in a same frequency band in which an orthogonality and a low interference is achieved among the SRSs. Accordingly, the eNB performs the channel quality estimation with each of the received SRSs. In the LTE system, the orthogonality is achieved among the received SRSs by using an interleaved frequency-division multiple access (IFDMA), limiting the sounding bandwidth used by the UE, and transmitting the SRS with a specially designed sequence (e.g. a Zadoff-Chu sequence) corresponding to a cyclic time shift and a base sequence. The low interference is achieved by using an interference randomization where a sequence-group hopping among base sequences and a cyclic shift hopping are used.

A long term evolution-advanced (LTE-A) system, as its name implies, is an evolution of the LTE system. The LTE-A system targets faster switching between power states, improves performance at the coverage edge of the eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. An LTE-A specification supports CA for both continuous and non-continuous component carriers with each component carrier limited to a maximum of 110 resource blocks. The CA increases a bandwidth flexibility by aggregating the non-continuous component carriers. A component carrier is either used as an UL component carrier or a downlink (DL) component carrier, but not both. Further, there is a one-to-one correspondence between the UL component carrier and the DL component carrier, i.e., each UL component carrier is paired with a corresponding DL component carrier.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resource. The UL and DL primary component carriers are used for establishing and re-establishing the radio resource control (RRC), and transmitting and receiving the system information. The UL or DL primary component carrier can not be de-activated, but can be changed by a handover procedure with the RACH procedure.

Since the method for performing the SRS transmission in the LTE system is designed for the UE and the network with only a single component carrier, the method can not be applied to the LTE-A system with the component carriers. In detail, if the UE transmits the SRS on the component carriers, there is a greater flexibility for the eNB to perform the frequency-selective scheduling, i.e., performing the frequency-selective scheduling among the component carriers. However, the resource and the SRS sequence with respective parameters are not sufficient to maintain the orthogonality and the low interference when the UEs transmit SRSs to the network on the component carriers. Therefore, parameters including an SRS subframe, a IFDMA repetition factor, a duration, a periodicity, a subframe offset, a sounding bandwidth, a transmission comb, an SRS sequence, and a cyclic time shift must be extended or modified. Protocols as well as respective signalings must also be enhanced.

### Summary of the Invention

The disclosure therefore provides a method and related communication device for handling sounding reference signal transmission to solve the abovementioned problems.

A method of handling a sounding reference signal (SRS) transmission for a mobile device in a wireless communication system is disclosed. The method comprises enabling a mobile device-specific carrier aggregation (CA) with at least one uplink (UL) component carrier, and performing the SRS transmission on the at least one UL component carrier to a network according to at least one of a mobile device-specific SRS configuration, a component carrier-specific SRS configuration and a cell-specific SRS configuration, which are configured by the network.

A method of handling a sounding reference signal (SRS) configuration for a mobile device in a wireless communication system is disclosed. The method comprises enabling a mobile device-specific carrier aggregation (CA) with at least one uplink (UL) component carrier, and receiving at least one SRS configuration for performing at least one SRS transmission, wherein the SRS configuration is comprised in at least one of mobile device-specific signaling and a cell broadcast signaling transmitted by a network.

A communication device of a wireless communication system for handling a sounding reference signal (SRS) transmission is disclosed. The communication device comprises means for enabling a communication device-specific carrier aggregation (CA) with at least one uplink (UL) component carrier, and means for performing the SRS transmission on the at least one UL component carrier to a network according to at least one of a communication device-specific SRS configuration, a component carrier-specific SRS configuration and a cell-specific SRS configuration, which are configured by the network.

A communication device of a wireless communication system for handling a sounding reference signal (SRS) configuration is disclosed. The communication device comprises means for enabling a communication device-specific carrier aggregation (CA) with at least one uplink (UL) component carrier, and means for receiving at least one SRS configuration for performing at least one SRS transmission, wherein the SRS configuration is comprised in at least one of mobile device-specific signaling and a cell broadcast signaling transmitted by a network.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of an exemplary wireless communication system according to the prior art.

FIG. 2 is a schematic diagram of an exemplary wireless communication system according to the present disclosure.

Fig. 3 is a schematic diagram of an exemplary communication device according to the present disclosure.

Fig. 4 is a flowchart of an exemplary process according to the present disclosure.

Fig. 5 is a flowchart of an exemplary process according to the present disclosure.

### Detailed Description

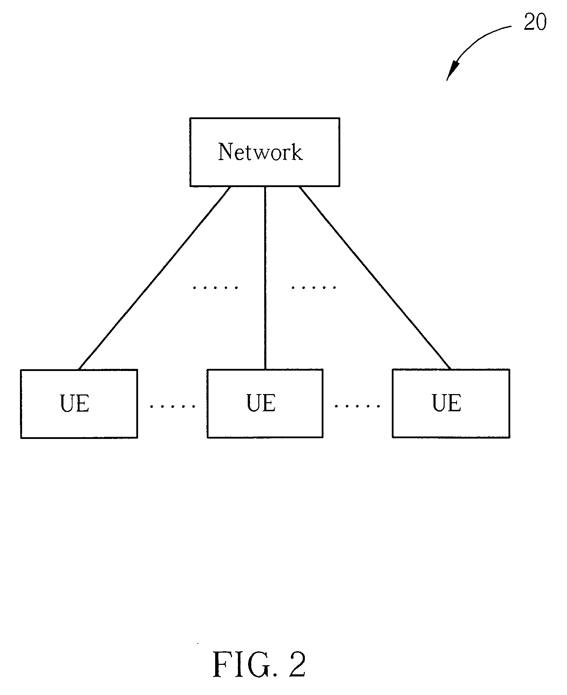

Please refer to Fig. 2, which is a schematic diagram of a wireless communication system 20 according to an example of the present disclosure. The wireless communication system 20, such as a long term evolution-advanced (LTE-A) system or other mobile communication systems supporting a carrier aggregation (CA), is briefly composed of a network and a plurality of user equipments (UEs). In Fig. 2, the network and the UEs are simply utilized for illustrating the structure of the wireless communication system 20. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and the UE can be seen as a transmitter or receiver according to transmission direction, e.g., for an uplink (UL), the UE is the transmitter and the network is the receiver, and for a downlink (DL), the network is the transmitter and the UE is the receiver.

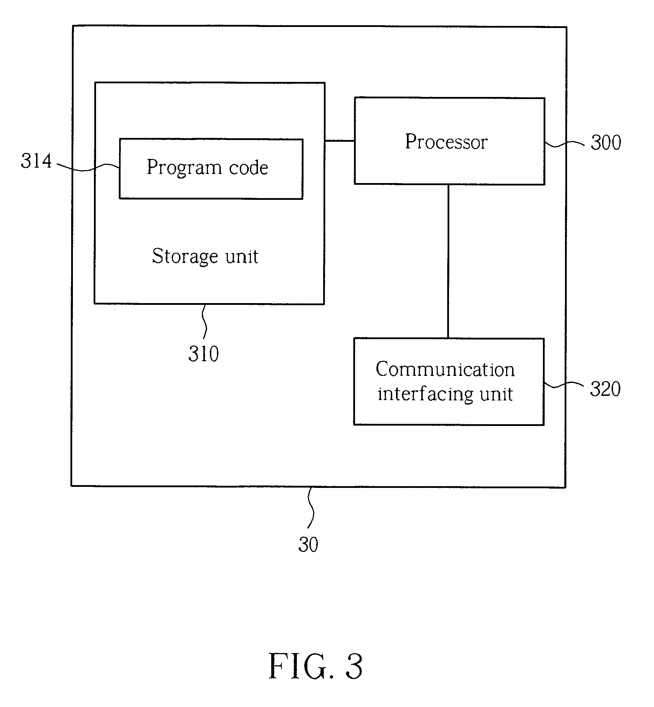

Please refer to Fig. 3, which is a schematic diagram of a communication device 30 according to an example of the present disclosure. The communication device 30 can be the UE or the network shown in Fig. 2, but is not limited herein. The communication device 30 may include a processor 300 such as a microprocessor or Application Specific Integrated Circuit (ASIC), a storage unit 310 and a communication interfacing unit 320. The storage unit 310 may be any data storage device that can store a program code 314, accessed by the processor 300. Examples of the storage unit 310 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 320 is preferably a radio transceiver and can exchange wireless signals with the network according to processing results of the processor 300.

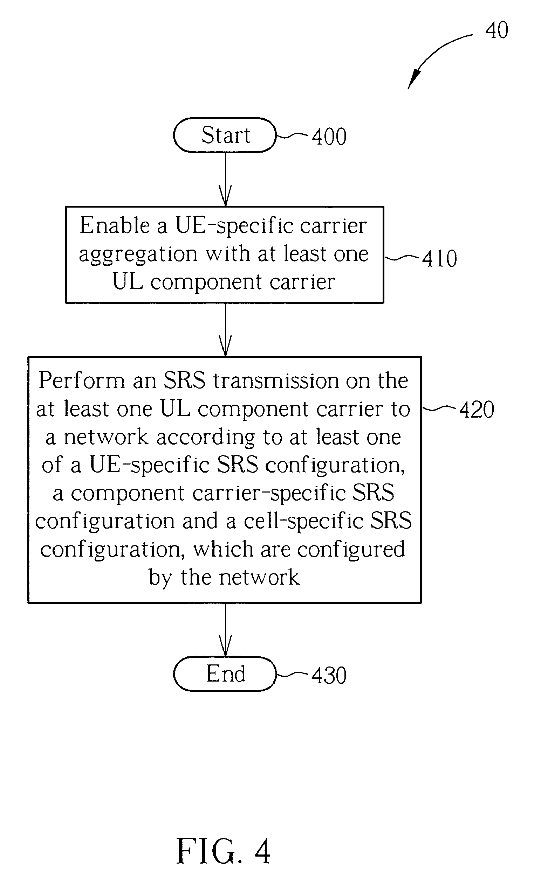

Please refer to Fig. 4, which is a flowchart of a process 40 according to an example of the present disclosure. The process 40 is utilized in a UE of the wireless communication system 20 shown in Fig. 2. The process 40 may be compiled into the program code 314 and includes the following steps:

Step 400: Start.

Step 410: Enable a UE-specific CA with at least one UL component carrier.

Step 420: Perform an SRS transmission on the at least one UL component carrier to a network according to at least one of a UE-specific SRS configuration, a component carrier-specific SRS configuration and a cell-specific SRS configuration, which are configured by the network.

Step 430: End.

According to the process 40, the network configures the UE-specific CA to the UE, and the UE performs the SRS transmission on the at least one UL component carrier to the network according to at least one of the UE-specific SRS configuration, the component carrier-specific SRS configuration and the cell-specific SRS configuration. In other words, parameters required for the SRS transmission are included in the at least one of the UE-specific SRS configuration, the component carrier-specific SRS configuration and the cell-specific SRS configuration. The parameters include at least one of an SRS subframe, an interleaved frequency-division multiple access (IFDMA) repetition factor, a duration, a number of aperiodic dynamic SRS configuration, a periodicity, a subframe offset, an system bandwidth, an SRS bandwidth, an SRS sequence length, an SRS repetition factor (RPF), an SRS hopping bandwidth, a number of available SRS sequence, a frequency domain position, a transmission comb, an SRS sequence and a cyclic time shift for the at least one UL component carrier of the UE. Among the parameters, at least one of the SRS repetition factor, the transmission comb, the SRS sequence length, the number of available SRS sequence, the system bandwidth and the SRS bandwidth can be component carrier-specific. Further, the UE receives a UE-specific signaling (e.g. a radio resource control (RRC) signaling) and a cell-specific signaling (e.g. a cell broadcast signaling) from the network to obtain the parameters. Therefore, the UE can perform the SRS transmission on at least one UL component carrier according to the above illustration and the process 40, when the UE is configured with the CA.

When the UE is configured with an aperiodic dynamic SRS transmission (e.g. according to the "duration" parameter) by the network, the UE performs one or a plurality of aperiodic dynamic SRS transmissions according to "the number of aperiodic dynamic SRS configuration" parameter in the UE-specific configuration. In other words, the network can configure the UE to perform the SRS transmission at a certain time instant according to a certain rule, for example, when the network determines that channel quality information obtained from a previous SRS is expired, in addition to periodic SRS transmissions of the UE. On the other hand, the cell-specific signaling can include at least one of a UE-common and a component carrier-common configuration.

Please note that, an SRS configuration of each of the at least one UL component carrier may be either UE-specific or cell-specific, and may be the same with each other or different from each other. Even though the SRS configuration of each of the at least one UL component carrier is different from each other, some parameters of the SRS configuration may be the same for some of the at least one UL component carrier (e.g. the subframe offset and the periodicity).

In general, the UE does not perform the SRS transmission on all component carriers in one subframe, to maintain an orthogonality and a low interference among SRSs of a plurality of UEs in the wireless communication system. However, the network may configure the UE to perform the SRS transmission on the all UL component carriers in one subframe in a certain situation or according to a certain rule, for example, when the network needs to fairly evaluate channel qualities of the UE on the all UL component carriers in the subframe. Furthermore, the network may configure the UE to perform the SRS transmission on the all UL component carriers in one subframe according to at least one of a mobile device-specific SRS configuration, a component carrier-specific SRS configuration and a cell-specific SRS configuration.

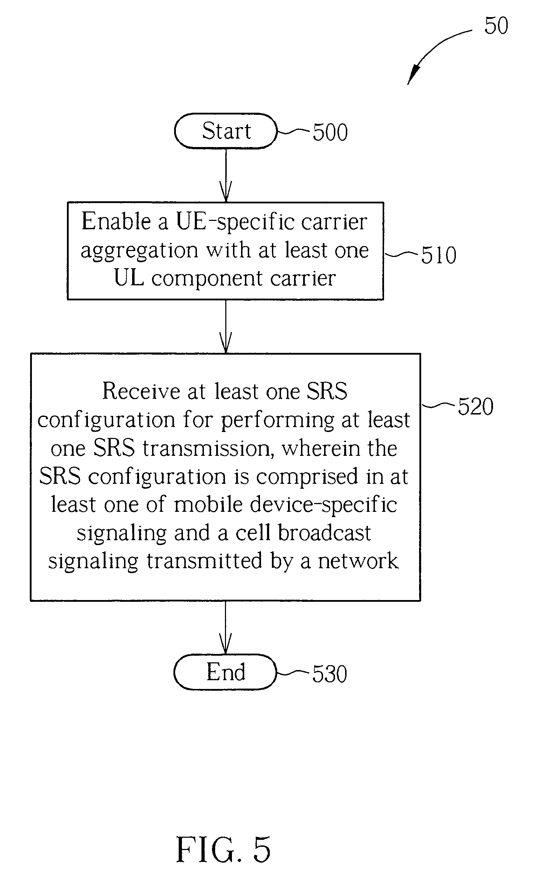

Please refer to Fig. 5, which is a flowchart of a process 50 according to an example of the present disclosure. The process 50 is utilized in a UE of the wireless communication system 20 shown in Fig. 2. The process 50 may be compiled into the program code 314 and includes the following steps:

Step 500: Start.

Step 510: Enable a UE-specific CA with at least one UL component carrier.

Step 520: Receive at least one SRS configuration for performing at least one SRS transmission, wherein the SRS configuration is comprised in at least one of mobile device-specific signaling and a cell broadcast signaling transmitted by a network.

Step 530: End.

According to the process 50, the UE can be configured with the at least one SRS configuration by at least one of the UE-specific signaling and the cell broadcast signaling transmitted by the network, to perform at least one periodic SRS transmission or at least one aperiodic dynamic SRS transmission. The UE-specific signaling can be achieved by at least one of a physical downlink control channel (PDCCH) signaling, a PDCCH signaling with UL grant, and a RRC signaling. Further, an aperiodic dynamic SRS transmission is only configured with the PDCCH signaling with UL grant. Therefore, the UE can perform the aperiodic dynamic SRS transmission on at least one UL component carrier according to the above illustration and the process 50, when the UE is configured with the CA.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 30.

In conclusion, the exemplary method and means are provided to enhance the SRS transmission for the UE in the LTE system in which the UE can only perform the SRS transmission on a single component carrier, to operate in the wireless communication system (e.g. the LTE-A system) with a plurality of component carriers, i.e., the CA.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a sounding reference signal (SRS) transmission for a mobile device in a wireless communication system, the method comprising:
enabling a mobile device-specific carrier aggregation (CA) with at least one uplink (UL) component carrier; and
performing the SRS transmission on the at least one UL component carrier to a network according to at least one of a mobile device-specific SRS configuration, a component carrier-specific SRS configuration and a cell-specific SRS configuration, which are configured by the network.

2. The method of claim 1, wherein the mobile device-specific SRS configuration, the component carrier-specific SRS configuration and the cell-specific SRS configuration comprise at least one of an SRS subframe, an interleaved frequency-division multiple access (IFDMA) repetition factor, a duration, a number of aperiodic dynamic SRS configuration, a periodicity, a subframe offset, a system bandwidth, an SRS bandwidth, an SRS sequence length, an SRS repetition factor (RPF), an SRS hopping bandwidth, a number of available SRS sequence, a frequency domain position, a transmission comb, an SRS sequence and a cyclic time shift for the at least one UL component carrier of the mobile device.

3. The method of claim 2, wherein at least one of the SRS repetition factor, the transmission comb, the SRS sequence length, the system bandwidth, the number of available SRS sequence and the SRS bandwidth is component carrier-specific.

4. The method of claim 2 further comprising performing one or a plurality of aperiodic dynamic SRS transmissions according to the number of aperiodic dynamic SRS configuration in the mobile device-specific SRS configuration, when the mobile device is configured with operation of aperiodic dynamic SRS transmission.

5. The method of claim 2, wherein the mobile device-specific SRS configuration, the component carrier-specific SRS configuration and the cell-specific SRS configuration are included in at least one of a mobile device-specific signaling and a cell-specific signaling transmitted by the network.

6. The method of claim 5, wherein the cell-specific signaling comprises at least one of a first SRS configuration which is the same for a plurality of mobile devices, and a second SRS configuration which is the same for a plurality of component carriers.

7. The method of claim 1, wherein an SRS configuration of each of the at least one UL component carrier is mobile device-specific or cell-specific, and SRS configurations of some of the at least one UL component carrier are the same with each other, different from each other, or partly the same with each other.

8. The method of claim 1 further comprising performing the SRS transmission on all UL component carriers in a subframe.

9. The method of claim 8 further comprising performing the SRS transmission on all UL component carriers in a subframe according to at least one of the mobile device-specific SRS configuration, the component carrier-specific SRS configuration and the cell-specific SRS configuration.

10. A method of handling a sounding reference signal (SRS) configuration for a mobile device in a wireless communication system, the method comprising:
enabling a mobile device-specific carrier aggregation (CA) with at least one uplink (UL) component carrier; and
receiving at least one SRS configuration for performing at least one SRS transmission, wherein the SRS configuration is comprised in at least one of a mobile device-specific signaling and a cell broadcast signaling transmitted by a network.

11. The method of claim 10, wherein the mobile device-specific signaling is comprised in at least one of a physical downlink control channel (PDCCH) signaling, a PDCCH signaling with uplink (UL) grant and a radio resource control (RRC) signaling.

12. The method of claim 11, wherein an aperiodic dynamic SRS transmission of the at least one SRS transmission is only configured with the PDCCH signaling with UL grant.
